# EUROPÄISCHE PATENTSCHRIFT

(11) **EP 3 168 345 B1**
(45) Veröffentlichungstag und Bekanntmachung des Hinweises auf die Patenterteilung: **13.09.2017**
(21) Anmeldenummer: 15194701.7
(22) Anmeldetag: 16.11.2015
(51) Int. Cl.: D03D 1/00

(54) **REDUNDANTER SICHERHEITSGURT**
REDUNDANT SAFETY BELT
CEINTURE DE SECURITE REDONDANTE

(43) Veröffentlichungstag der Anmeldung: 17.05.2017
(73) Patentinhaber: Beutler, Jörg, 83607 Holzkirchen (DE)
(72) Erfinder: Beutler, Jörg, 83607 Holzkirchen (DE)
(74) Vertreter: Lermer, Christoph

(56) Entgegenhaltungen:
- EP-A1- 1 663 736
- EP-A2- 0 997 358
- WO-A1-03/055728
- DE-A1- 2 449 897

## Beschreibung

### TECHNISCHES GEBIET

Die Erfindung betrifft ein Gurtband für ein Sicherheitsgurtsystem und ein Rückhaltesystem mit einem entsprechenden Gurtband.

### STAND DER TECHNIK

Gurtbänder und entsprechende Rückhaltesysteme sind in den verschiedensten Ausführungen für den Schutz von Insassen von Fahrzeugen aller Art bekannt. Hierbei tritt die Problemstellung auf, die Bruchfestigkeit des Gurtbandes auf Dauer beizubehalten, um die Sicherheit der Fahrzeuginsassen zu jedem Zeitpunkt und dauerhaft zu gewährleisten. Dazu muss eventuellen Schäden des Gurtbandes, die durch Materialermüdung oder durch externe Beschädigungen hervorgerufen werden, vorgebeugt werden und daneben auch rechtzeitig erkannt werden. Gerade im Betrieb mit Fahrzeugen, die einer hohen Belastung ausgesetzt sind, beispielsweise Achterbahnfahrzeuge, ist dies von erheblicher Bedeutung. Deren Gurtbänder stehen unter großer Beanspruchung, bedingt durch eine hohe Krafteinwirkung, durch z.B. Beschleunigungs-, Gravitations- und Fliehkräfte, welche in bisweilen schnellen Intervallen und Wechseln vom unbelasteten zum belasteten Zustand auf das Fahrzeug einwirken, verbunden mit einem häufigen Wechsel der Fahrgäste. Aus diesem Grund werden statt flexibler Gurtbänder, starre Bügel beispielsweise aus Stahl verwendet, um die Sicherheit der Insassen zu jeder Zeit zu gewährleisten. Beim Einsatz von Gurten ist eine regelmäßige Inspektion der Materialfestigkeit des Gurtbandes notwendig, um frühzeitig eine Beschädigung zu detektieren und geeignete Sicherheitsmaßnahmen ergreifen zu können.

Die Druckschrift WO 03/055728 A1 offenbart ein Gurtband gemäß dem Oberbegriff des Anspruchs 1 mit einem gewobenen Streifen mit Verstärkungssträngen.

Die Druckschrift EP1663736 A1 zeigt ein gewobenes Band für Sicherheitsgurte in Fahrzeugen mit einer ersten und einer zweiten Art von Kettfäden.

Die Druckschrift DE 24 49 897 offenbart eine justierbare Unterlagscheibe in Verbindung mit einem Befestigungselement.

### AUFGABE DER ERFINDUNG

Ausgehend davon, besteht die Aufgabe der vorliegenden Erfindung darin, ein Gurtband und ein Rückhaltesystem bereitzustellen, bei denen die erforderliche Bruchfestigkeit dauerhaft vorhanden ist und die in der Handhabung leicht und flexibel sind.

### TECHNISCHE LÖSUNG

Die Aufgabe wird durch ein Gurtband nach Anspruch 1 und ein Rückhaltesystem mit einem entsprechenden Gurtband nach Anspruch 11 gelöst. Das erfindungsgemäße Gurtband für ein Sicherheitsgurtsystem weist wenigstens ein sich entlang der Länge L des Gurtbands erstreckendes erstes Festigkeitselement und ein sich entlang der Länge L des Gurtbands erstreckendes zweites Festigkeitselement auf, wobei das erste Festigkeitselement und das zweite Festigkeitselement durch einen Träger miteinander verbunden sind. Der Träger besteht aus Kunststoff, und das erste Festigkeitselement und/oder das zweite Festigkeitselement ist in den Träger des Gurtbands eingegossen und die Festigkeitselemente bestehen aus hochfestem Material wie z.B. Stahl, Stahlcord, Aramid und/ oder Kevlar, und schnittsicher sind. Die wenigstens zwei Festigkeitselemente können parallel zur Länge L seitlich beabstandet zueinander angeordnet sein. Es können jedoch auch zwei oder mehrere Festigkeitselemente direkt nebeneinander, seitlich und/oder übereinander angeordnet werden. Die Festigkeitselemente sind vorzugsweise so ausgelegt, dass jedes der Festigkeitselemente mindestens die volle vorgeschriebene oder technisch erforderliche Bruchlast bzw. Zugbelastung aufnehmen kann. Auf diese Weise wird ein System geschaffen, in dem durch Redundanz die Sicherheit erhöht wird.

Die Festigkeitselemente dienen der Aufnahme von Zugkräften. Die gesamte Bruchlast des Gurtes ergibt sich aus Summe der Einzelbruchlasten der Festigkeitselemente, die als Zugstränge ausgebildet sein können. Durch Verwendung von mehr als einem Festigkeitselement kann eine komplette Redundanz erzielt werden, sofern jedes Festigkeitselement für sich die Gesamtbruchlast aufweist. Im Falle von zwei Festigkeitselementen wäre daher insgesamt die doppelte Bruchlast vorhanden. Im Falle des Versagens eines Festigkeitselements würde das andere, noch vorhandene Element, die statisch erforderliche Bruchlast aufweisen. Aufgrund der Vielzahl an Zugelementen sind die Einzelbruchlasten kleiner gestaffelt, so dass bei Versagen eines Festigkeitselements die Gesamtbruchlast des Gurtes weniger geschwächt wird.

Durch diese redundante Ausführung wird die Sicherheit des Gurtbandes, bzw. Gurtsystems erhöht, so dass bei Versagen eines Teils des Gurtbandes oder -systems die beförderte Person weiterhin zuverlässig gesichert bleibt. Damit können Gurt-Rückhaltesysteme z.B. für Vergnügungsanlagen hergestellt werden, die die höchsten Sicherheitsanforderungen erfüllen, was bisher nur durch schwere Bügelkonstruktionen möglich war. Gerade im Betrieb mit Fahrzeugen, die einer hohen und dauerhaften Belastung ausgesetzt sind, beispielsweise Vergnügungsfahrzeuge, Achterbahnfahrzeuge oder anderweitige Schienenfahrzeuge, ist die redundante Ausführung des Rückhaltesystems von erheblicher Bedeutung. Deren Gurtbänder und Rückhaltesysteme stehen unter großer Beanspruchung, bedingt durch eine hohe Krafteinwirkung, durch z.B. Beschleunigungs-, Gravitations- und Fliehkräfte, welche in bisweilen schnellen Intervallen und Wechseln vom unbelasteten zum belasteten Zustand auf das Fahrzeug einwirken, verbunden mit einem häufigen Wechsel der Fahrgäste.

Das Gurtband weist einen Träger auf, der die Trägerelemente miteinander verbindet und/oder relativ zueinander platziert. Die Festigkeitselemente müssen prinzipiell nicht gleichmäßig im Träger verteilt sein. So ist beispielsweise eine Anordnung am Rand möglich, um Beschädigungen des Gurtbandes durch Schnitte vorzubeugen. Diese Anordnung ist außerdem vom Vorteil, bzw. wenn das Gurtband in der Mitte ohne Festigkeitselement ausgeführt ist (oder umgekehrt bzw. die Anordnung der Festigkeitselemente ist daraufhin optimiert), um ein komfortabel breites Gurtband bei gleichzeitig hoher Biegewilligkeit herzustellen. Der Träger selbst kann so ausgebildet sein, dass dieser keine oder nur sehr geringe Bruchlast aufnehmen kann und lediglich dazu dient, die Festigkeitselemente zu platzieren.

Die Festigkeitselemente können aus Kunststoff hergestellt sein.

Der Träger des erfindungsgemäßen Gurtbands besteht insbesondere z.B. aus PU oder PUR. Das erste Festigkeitselement und / oder das zweite Festigkeitselement ist in den Träger des Gurtbands eingegossen. Das Gurtband kann somit flach ausgebildet werden, was erhebliche Vorteile ergibt. So ist die Bruchkraft erhöht, die definierte Bruchfestigkeit ist auch bei Beschädigung gewährleistet und bietet somit Schutz vor Vandalismus, die Verschleiß festigkeit ist erhöht, da weniger Bruchkraftverlust aufgrund Abriebs vorliegt. In Folge der Einbettung der Festigkeitselemente im Gurtband sind diese vor Nässe und Schmutz geschützt.

Insbesondere sind die mindestens zwei Festigkeitselemente parallel zur Länge L seitlich beabstandet zueinander angeordnet sind.

Durch die Verwendung von Stahlseilen oder ähnlich festen Festigkeitselementen aus hochfesten Materialien in Verbindung mit dem oben genannten Eingießen in den Kunststoff des Gurtbands bieten sich erhebliche Vorteile gegenüber bestehender üblicher Sicherheitsbügelsysteme. So ist das erfindungsgemäße Gurtband leichter gegenüber üblicher Stahlbügel, wodurch auch das Fahrzeuggewicht verringert wird und statische Vorteile entstehen. Daneben ist das Gurtband, platzsparender, da anstelle eines großen Bügels nur Gurtschloss und Gurtaufroller notwendig sind, wodurch mehr Sitze auf selben Raum möglich sind. Daneben ist ein höherer Sitzkomfort und Komfort beim Ein- und Aussteigen möglich, da der Bügel nicht im Weg ist. Durch die beschriebene flache Anordnung des Gurtbandes schmiegt sich dieses immer komplett an jede Körperform an, was bei herkömmlichen starren Bügeln nicht möglich ist. Dadurch ist beispielsweises das Sichern von sehr kleinen und gleichzeitig sehr großen Personen möglich ist, was ansonsten oft nur mit zusätzlichem technischem Aufwand möglich ist. Zur Verbesserung der Biegewilligkeit können regelmäßige Querrillen im Träger bzw. im Gurtband dienen (vorzugsweise auf der Innenradius-Seite). Das erfindungsgemäße Festigkeitselement ist außerdem schnittsicher und bietet von daher vor Beschädigungen von außen, beispielsweise durch Vandalismus oder Materialabrieb.

Besonders bevorzugt sind die Festigkeitselemente mit der maximalen Bruchlast dimensioniert. Da bereits jedes Festigkeitselement die maximale Bruchlast aufweist, ist wenigstens eine doppelte Sicherheit des Benutzers gegeben. Die maßgebende Bruchlast des Gurtbands ist unter anderem abhängig vom Gewicht des Fahrzeuginsassen des jeweiligen Fahrzeugtyps und die darauf einwirkenden Kräfte bedingt durch die jeweilige Bewegungsform, wie z.B. Beschleunigungs-/Verzögerungskraft, Fliehkraft, Gravitationskraft etc., zuzüglich eines entsprechenden Sicherheitsbeiwerts.

Bevorzugt ist mindestens ein Festigkeitselement elektrisch leitfähig. Das Festigkeitselement kann vorzugsweise aus leitendem Material ausgeführt sein, dessen Bruch über die elektrische Leitfähigkeit bzw. die durch Unterbrechung der Leitfähigkeit detektiert wird.

Alternativ und/ oder zusätzlich zum leitfähigen oder nicht leitfähigen Festigkeitselement kann das Gurtband wenigstens ein zwischen wenigstens zwei Punkten elektrisch leitfähiges Element aufweisen, das am bzw. im Gurtband angeordnet ist. Das elektrisch leitfähige Element kann sich in jeder denkbaren Form, z.B. in Form eines Fadens und Anordnung, wie z.B. entlang der Länge oder der Breite des Gurtbandes, diagonal, in gerader oder in ungerader Anordnung am oder im Gurtband erstrecken. Mit Anlegen einer elektrischen Spannung, bzw. der Erzeugung einer Potentialdifferenz an den beiden Punkten wird über das leitfähige Element ein Stromfluss erzeugt.

Vorzugsweise besteht das leitfähige Element des Gurtbands aus einem oder mehreren leitfähigen Fäden. Der oder die Fäden werden an der oder den Außenseiten des Gurtbandes, insbesondere an dem unteren und/oder dem oberen Rand des Gurtbandes, aufgebracht und/oder z.B. durch Einweben in das Gurtband integriert. Die Verwendung von Fäden bietet den Vorteil der guten Integration in das Gurtband bei einer hohen elektrischen Leitfähigkeit. Durch das Anbringen eines oder mehrerer Fäden an der Außenseite, bzw. an der Längskante des Gurtbandes kann eine externe Beschädigung des Gurtbandes, durch Anritzen, Anschneiden, etc. mit einem scharfen Gegenstand wie z.B. einem Messer oder einer Schere etc. frühzeitig erkannt werden. Durch die Beschädigung wird der Faden an der Außenseite beschädigt, wodurch die Leiterbahn und demzufolge auch der Stromfluss zwischen den Punkten vermindert oder ganz unterbrochen werden. Der verminderte oder unterbrochene Stromfluss wird gemessen und als Störung erkannt, bzw. gemeldet und eventuelle Maßnahmen, wie Abbremsen des Fahrzeugs können eingeleitet werden. Daneben kann ein weiterer oder mehrere weitere Fäden beabstandet zur Außenseite des Gurtbandes etwa in die Mitte des Gurtbandes angeordnet sein. Durch die mittige Anordnung kann auch eine Beschädigung der Mitte des Gurtbandes detektiert werden, die z.B. durch ein Einstechen eines spitzen Gegenstands in der Gurtbandmitte hervorgerufen wird. Der Abstand zur Außenseite und die Anzahl der Fäden können dabei beliebig sein.

Bevorzugt kann das leitfähige Element U-förmig angeordnet sein und insbesondere aus wenigstens einem (oder mehreren) leitfähigen Faden in U-Form bestehen. Durch die U-Form des Fadens wird eine Hin- und Rückführung des leitfähigen Elements durch das Gurtband ermöglicht, so dass eine Vereinfachung des Aufbaus des Stromkreislaufs und der Messung des Stroms erzielt werden kann. Dabei fließt der Strom von einem ersten Punkt an einer Seite des Gurtbands durch das Gurtband hindurch zu einem zweiten Punkt an der gleichen Seite des Gurtbands. Die Einspeisung und die anschließende Messung des Stroms können an der gleichen Seite des Gurtbandes erfolgen. Im Gegensatz dazu wird bei der Verwendung von einem oder mehreren Fäden, der durch das Gurtband verläuft, der Strom zwischen zwei gegenüberliegenden Punkten durch das Gurtband geleitet. Der Stromkreislauf muss hierbei extern geschlossen werden, was mit einem Mehraufwand verbunden ist, z.B. durch entsprechende elektrische Verbindung außerhalb des Gurtbandes. Einspeisung und Messung des Stroms erfolgen dabei an unterschiedlichen Punkten. Für die Anordnung des oder der Fäden in U-Form werden vorzugsweise die beiden Außenseiten, bzw. die beiden Längskanten des Gurtbandes durch jeweils einen Fadenabschnitt überwacht. Die Fadenabschnitte erstrecken sich beispielsweise entlang der oberen und unteren Längskante des Gurtbandes und sind durch wenigstens einen weiteren Fadenabschnitt verbunden, der quer zu den Längskanten verläuft. Das leitfähige Element bildet damit einen leitfähigen U-förmigen Abschnitt, dessen freie Enden jeweils dem ersten und dem zweiten Punkt entsprechen. Diese Ausführung hat den Vorteil, dass der Stromfluss nur durch einen Faden überwacht werden muss, im Gegensatz zu zwei getrennten Fäden, die jeweils an der oberen oder unteren Außenseite angebracht sind.

Daneben kann das leitfähige Element aus zwei oder mehreren voneinander getrennten Fäden bestehen, die durch wenigstens ein weiteres leitfähiges Element miteinander elektrisch verbunden sind. Zwei Fäden können gemäß dem vorgenannten Prinzip des U-förmigen Fadens zu einer Leiterbahn verbunden werden, um nur die Strommessung, bzw. die Überwachung von einer Leiterbahn durchführen zu müssen. Die elektrisch leitfähige Verbindung wird durch einen weiteren Faden zwischen zwei Punkten der beiden Fäden oder durch schleifenförmiges Einlegen eines Fadens (bzw. entsprechendes Verbinden der Fadenenden) zwischen mehreren Punkten der Fäden hergestellt. Andere Verbindungen sind ebenfalls denkbar. Von daher kann eine einfache oder eine mehrfache Verbindung hergestellt werden, die an jedem beliebigen Punkt der Fäden, wie z. B, am Anfang, in der Mitte und Ende des jeweiligen Fadens erfolgt.

Infolge der elektrischen Leitfähigkeit des leitfähigen Elements oder des Festigkeitselements ist ein Stromfluss messbar. Für die Messung des Stromflusses kommen alle denkbaren und bekannten Messgeräte und Messmethoden in Betracht. Infolge der Messbarkeit des Stromflusses kann das Gurtband überwacht werden und eine Schwachstelle infolge einer (unbemerkten) Beschädigung des leitfähigen Festigkeitselements oder zumindest im Bereich des leitfähigen Elements erkannt werden. Damit kann eine mit der Beschädigung einhergehende unzulässige Reduzierung der Bruchfestigkeit des Gurtbandes vermieden werden. Bei einem unbeschädigten Gurtband ist demnach ein Stromfluss messbar, der der angelegten Spannung in Verbindung mit einem Widerstandswert des leitfähigen Elements entspricht und somit den erstrebten Sollzustand darstellt. Im Falle einer Beschädigung des leitfähigen Elements wird die Leitfähigkeit beeinträchtigt bis hin zu einer vollständigen Unterbrechung des Stromflusses. Ein Abfallen, bzw. eine vollständige Unterbrechung des Stromflusses lässt von daher einen Rückschluss auf eine Beschädigung des leitfähigen Elements und somit auch auf das Gurtband zu. Die Messung des Stroms kann permanent und ununterbrochen oder zu beliebigen Zeitpunkten in Intervallen oder zu einem bestimmten Ereignis erfolgen, z.B. zu Beginn einer Fahrt oder mit Anlegen des Gurtbandes, um den Zustand des Gurtbandes zu überprüfen.

Daneben ist auch eine Unterbrechung des Stromflusses infolge der Leitfähigkeit des Festigkeitselements messbar. Zum einen kann der Stromfluss auf dessen Vorhandensein geprüft werden (Positivprüfung). Zum anderen kann auch ein Abfallen bis hin zur Unterbrechung des Stromflusses detektiert werden (Negativprüfung). Möglich ist auch eine Kombination aus beiden Methoden, um eine größtmögliche Messsicherheit zu gewährleisten. Sofern die Messung einen Abfall oder eine Unterbrechung des Stromflusses erfasst, kann der Start des Fahrzeugs unterbunden, die Fahrt gestoppt werden oder ähnliche Maßnahmen ergriffen werden.

Die vorliegende Erfindung offenbart daneben ein Rückhaltesystem zum Einsatz in einem Fahrzeug, das wenigstens ein erfindungsgemäßes Gurtband und wenigstens ein Verriegelungselement umfasst. Das erfindungsgemäße Gurtband erfordert auch redundante Verbindung mit einem entsprechenden Rückhaltesystem. Als Verriegelungselement kann jedes bekannte Element, wie z.B. ein Gurtschluss mit entsprechender Aufnahme dienen. Die Gurtzunge (Gurtschnalle) kann bevorzugt mit zwei getrennten Befestigungen am Gurtband angebracht (z.B. zwei getrennte Klemmen im Falle eines Gurtbandes, zwei getrennte Nähte im Falle von verbundenen Gurtbändern). Auch die Gurtzunge selbst kann zum Zwecke der Redundanz auch doppelt ausgeführt sein.

Daneben umfasst das Rückhaltesystem eine Aufrollvorrichtung zum Aufrollen des Gurtbands. In einer vorteilhaften Ausführung ist das Gurtband an zwei redundanten Befestigungen mit der Aufrollvorrichtung verbunden, so dass im Fall des Versagens einer Befestigung das Gurtband nicht herausrutschen oder abrollen kann.

Bevorzugt umfasst das erfindungsgemäße Rückhaltesystem eine Überwachungsvorrichtung, wobei die Überwachungsvorrichtung nach Verschließen des Verriegelungselements eine über das wenigstens eine elektrisch leitfähige Element hergestellte elektrische Verbindung überwacht. Mit oder nach dem Verschließen des Verriegelungselements wird eine Spannung zwischen den beiden Punkten angelegt, die einen Stromfluss über das elektrisch leitfähige Element erzeugt. Der Stromfluss wird von der Überwachungsvorrichtung permanent oder in zeitlichen Abständen wie bereits oben beschrieben gemessen. Dabei stellt der durch die angelegte Spannung verursachte Stromfluss (in Verbindung mit dem Widerstand des leitfähigen Elements) den angestrebten Sollwert dar. Bei Messung einer Abweichung vom Sollwert, wird ein Signal erzeugt. Mit Hilfe von weiteren Steuerungs- und Regelungselementen können infolge des Signals geeignete Folge- und Sicherungsmaßnahmen eingeleitet werden. Andere Möglichkeiten der Messung, Überwachung und Steuerung sind denkbar. Alternativ kann die elektrische Verbindung aber auch schon vor Verschließen des Verriegelungselements bestehen. Damit kann auch eine Überwachung des Gurtbands permanent, also auch im unverschlossenen Zustand überwacht werden. Die elektrische Verbindung kann über das Verriegelungselement geschlossen werden oder die Leiterbahn kann innerhalb des Gurtbandes geschlossen werden. Die Messung des Stroms kann innerhalb des Gurtbandes oder außerhalb erfolgen.

Besonders vorteilhaft ist der Einsatz des Gurtbandes bzw. Rückhaltesystems bei Sitz-Sicherungssystemen und Fahrzeugen mit hohen minimalen Bruchlasten bzw. mit hoher erforderlicher Zugfestigkeit. Dies ist insbesondere bei Sitzen in Vergnügungsgeräten sowie bei Schienenfahrzeugen, wie Achterbahnfahrzeugen, Vergnügungsfahrzeugen, o.ä. der Fall.

### KURZE BESCHREIBUNG DER FIGUREN

- Figur 1: Darstellung eines erfindungsgemäßen Gurtbandes bei dem die Festigkeitselemente in Form von Litzen in das Gurtband aus Kunststoff eingegossen sind;
- Figur 2: Darstellung eines erfindungsgemäßen Gurtbandes bei dem die Festigkeitselemente leitfähige Elemente aufweisen;
- Figur 3: Darstellung eines Gurtbands, bei dem in der Mitte des Gurtbands zwischen zwei gegenüberliegenden Punkten ein leitfähiges Element in Form eines leitfähigen Fadens angeordnet ist;
- Figur 4: Darstellung eines Gurtbands, bei dem zwischen zwei gegenüberliegenden Punkten ein leitfähiges Element in Form von zwei Fäden angeordnet ist. Die beiden Fäden sind an der oberen und unteren Längskante des Gurtbandes angeordnet und sind an den beiden Punkten zusammengeführt;
- Figur 5: Darstellung eines Gurtbands, bei dem zwischen zwei Punkten ein leitfähiges Element in Form eines U-förmigen Fäden, angeordnet ist. Die beiden Punkte sind an einer Seite des Gurtbands angeordnet und der Faden verläuft an der oberen und unteren Längskante des Gurtbands.

### BESCHREIBUNG BEVORZUGTER AUSFÜHRUNGSBEISPIELE

Nachfolgend werden Ausführungen des erfindungsgemäßen Gurtbands für ein Rückhaltesystem beschrieben.

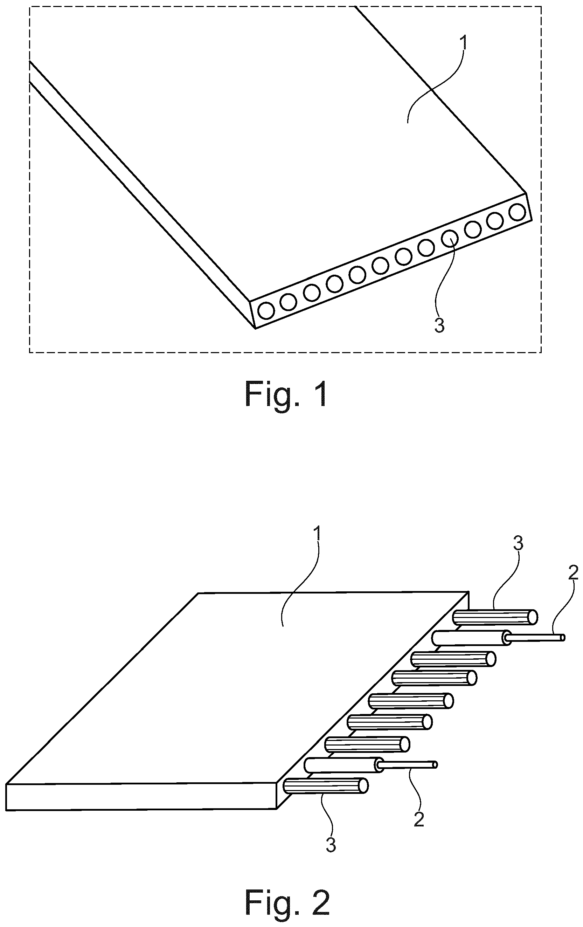

Figur 1 zeigt ein erfindungsgemäßes Gurtband 1, welches aus Kunststoff, z.B. 2-Schicht Polyurethan besteht. Mehrere Festigkeitselemente 3 sind in das Gurtband 1 in gleichen Abständen eingebettet und weisen eine Litzenstruktur auf. Die Bruchlast ist somit auf mehrere entlang der Breite des Gurtbandes nebeneinander angeordnete Festigkeitselemente verteilt. Deswegen kann das Gurtband flach und flexibel gestaltet werden.

Figur 2 zeigt ein weiteres erfindungsgemäßes Gurtband 1, welches ebenfalls aus Kunststoff besteht. Auch hier sind mehrere Festigkeitselemente 3 in das Gurtband 1 in gleichen Abständen eingebettet. Zusätzlich weisen die Festigkeitselemente 3 ein innenliegendes leitfähiges Element 2 auf. Denkbar ist aber auch, dass die jeweiligen Festigkeitselemente 3 im Ganzen leitfähig ausgestaltet sind.

Weitere Anordnungen des Gurtbands 1 und der Festigkeitselemente 3 sowie der Kombination von mehreren Gurtbändern sind denkbar und sind nicht auf die vorgenannten Ausführungsbeispiele beschränkt.

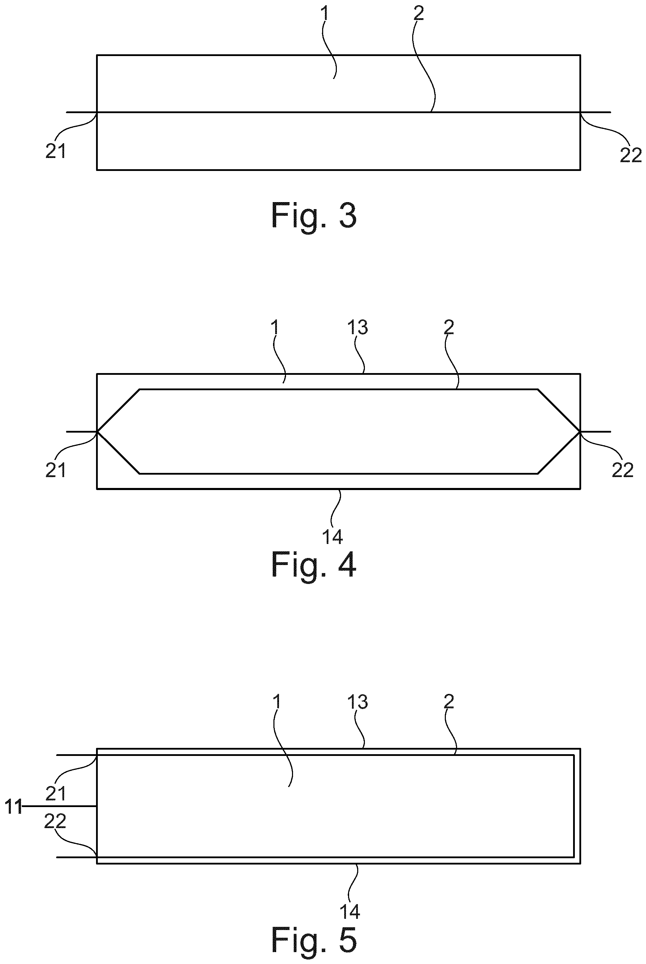

Aus den Figuren 3 bis 5 werden weitere Ausführungsformen des erfindungsgemäßen Gurtbands 1 mit einer unterschiedlichen Anordnung des elektrisch leitfähigen Elements 2 erkennbar.

Aus Figur 3 ist zwischen zwei gegenüberliegenden Punkten 21, 22 ein leitfähiges Element in Form eines leitfähigen Fadens 2 in der Mitte des Gurtbandes 1 angeordnet.

In Figur 4 ist ein weiteres erfindungsgemäßes Gurtband 1 dargestellt, bei dem zwischen zwei gegenüberliegenden Punkten 21, 22 leitfähige Elemente in Form von zwei Fäden 2 angeordnet sind, welche an den Längskanten 13, 14 des Gurtbandes 1 geführt sind und an den Punkten 21, 22 verbunden, bzw. zusammengeführt sind.

Figur 5 zeigt ein weiteres Gurtband 1, bei dem zwischen zwei Punkten 21, 22 ein leitfähiges Element in Form eines Fadens 2 in U-Form angeordnet ist. Der Faden 2 verläuft an der oberen Längskante 13 und unteren Längskante 14 des Gurtbands 1. Die beiden Punkte 21, 22 liegen an einem Ende 11 des Gurtbands 1.

Weitere Anordnungen des leitfähigen Elements sind denkbar und sind nicht auf die vorgenannten Ausführungsbeispiele beschränkt. Dies gilt auch für die Anzahl der leitfähigen Elemente und der Anordnung und Arten der Verbindung der leitfähigen Elemente untereinander.

## Patentansprüche

1. Gurtband (1) für ein Sicherheitsgurtsystem für Vergnügungsgeräte oder Vergnügungsfahrzeuge, wobei das Gurtband (1) wenigstens ein sich entlang der Länge L des Gurtbands erstreckendes erstes Festigkeitselement (3) und ein sich entlang der Länge L des Gurtbands erstreckendes zweites Festigkeitselement aufweist, wobei das erste Festigkeitselement und das zweite Festigkeitselement durch einen Träger miteinander verbunden sind, **dadurch gekennzeichnet, dass** der Träger aus Kunststoff besteht, dass das erste Festigkeitselement (3) und das zweite Festigkeitselement (3) in den Träger des Gurtbands (1) eingegossen ist, dass die Festigkeitselemente (3) aus hochfestem Material wie z.B. Stahl, Stahlcord, Aramid und/ oder Kevlar bestehen und schnittsicher sind.

2. Gurtband (1) nach Anspruch 1, **dadurch gekennzeichnet, dass** der Träger die Festigkeitselemente relativ zueinander platziert.

3. Gurtband (1) nach Anspruch 1 oder 2, **dadurch gekennzeichnet, dass** die Festigkeitselemente aus Kunststoff bestehen.

4. Gurtband (1) nach einem der vorhergehenden Ansprüche, **dadurch gekennzeichnet, dass** der Träger aus PU oder PUR besteht.

5. Gurtband (1) nach einem der vorhergehenden Ansprüche, **dadurch gekennzeichnet, dass** mindestens zwei Festigkeitselemente (3) parallel zur Länge L seitlich und/oder übereinander beabstandet zueinander angeordnet sind.

6. Gurtband (1) nach einem der vorhergehenden Ansprüche, **dadurch gekennzeichnet, dass** die Festigkeitselemente (3) eine Litzenstruktur aufweisen.

7. Gurtband (1) nach den vorhergehenden Ansprüchen, **dadurch gekennzeichnet, dass** mindestens ein Festigkeitselement (3) elektrisch leitfähig ist.

8. Gurtband (1) nach den vorhergehenden Ansprüchen, **dadurch gekennzeichnet, dass** am bzw. im Gurtband (1) wenigstens ein zwischen wenigstens zwei Punkten elektrisch leitfähiges Element (2) angeordnet ist.

9. Gurtband (1) nach den vorhergehenden Anspruch 7 und 8, wonach ein Stromfluss infolge der elektrischen Leitfähigkeit des Festigkeitselements (2) oder des leitfähigen Elements (3) messbar ist.

10. Gurtband (1) nach den vorhergehenden Ansprüchen 7 bis 9, **dadurch gekennzeichnet, dass** eine Unterbrechung des Stromflusses infolge der Leitfähigkeit des Festigkeitselements (2) oder des leitfähigen Elements (3) messbar ist.

11. Rückhaltesystem zum Einsatz in einem Fahrzeug, **dadurch gekennzeichnet, dass** das Rückhaltesystem wenigstens ein Gurtband (1) nach einem der vorhergehenden Ansprüche und wenigstens ein Verriegelungselement umfasst.

12. Rückhaltesystem nach Anspruch 11, **dadurch gekennzeichnet, dass** das Rückhaltesystem eine Aufrollvorrichtung zum Aufrollen des Gurtbands aufweist.

13. Rückhaltesystem nach den vorhergehenden Ansprüchen 11 oder 12, **dadurch gekennzeichnet, dass** es eine Überwachungsvorrichtung umfasst, wobei die Überwachungsvorrichtung nach Verschließen des Verriegelungselements eine über das wenigstens eine elektrisch leitfähige Element hergestellte elektrische Verbindung überwacht.

## Claims

1. Belt webbing (1) for a safety belt system for amusement rides or amusement cars, wherein the belt webbing (1) has at least one first strength member (3) extending along the length L of the belt webbing and a second strength member extending along the length L of the belt webbing, wherein the first strength member and the second strength member are interconnected by a support, **characterised in that** the support consists of resin, the first strength member (3) and the second strength member (3) is cast into the support of the belt webbing (1), the strength members (3) consist of high-strength material, such as steel, steel cord, aramid and/or Kevlar and are cut-proof.

2. Belt webbing (1) in accordance with claim 1,
**characterised in that**
the support positions the strength members relative to one other.

3. Belt webbing (1) in accordance with claim 1 or 2,
**characterised in that**
the strength members consist of resin.

4. Belt webbing (1) in accordance with any of the preceding claims,
**characterised in that**
the support consists of. PU or PUR.

5. Belt webbing (1) in accordance with any of the preceding claims,
**characterised in that**
at least two strength members (3) are laterally disposed parallel with the length L and/or spaced above one another.

6. Belt webbing (1) in accordance with any of the previous claims,
**characterised in that**
the strength members (3) have a braided structure.

7. Belt webbing in accordance with any of the preceding claims,
at least one strength member (3) is electrically conductive.

8. Belt webbing (1) in accordance with any of the preceding claims,
**characterised in that**
at and in the belt webbing (1), respectively, is arranged at least one electrically conductive element (2) between at least two points.

9. Belt webbing (1) in accordance with the preceding claims 7 and 8,
**characterised in that** a current flow is measurable owing to the electrical conductivity of the strength member (2) or of the conductive element (3).

10. Belt webbing (1) in accordance with any of the preceding claims 7 to 9, **characterised in that**
an interruption to the current flow is measurable on account of the conductivity of the strength member (2) or of the conductive element (3).

11. Restraint system for use in a vehicle,
**characterised in that**
the restraint system comprises at least one belt webbing (1) in accordance with any of the preceding claims and at least one locking element.

12. Restraint system in accordance with claim 11,
**characterised in that**
the restraint system has a retractor for winding up the belt webbing.

13. Restraint system in accordance with any of the preceding claims 11 or 12, **characterised in that**
it comprises a monitoring apparatus, wherein the monitoring apparatus, after the locking member has closed, monitors an electrical connection created via the at least one electrically conductive element.

## Revendications

1. Sangle de ceinture (1) destiné à un système de ceinture de sécurité pour des appareils de divertissement ou véhicules de divertissement, la sangle de ceinture (1) comportant au moins un premier élément de résistance (3) s'étendant le long de la longueur L de la sangle de ceinture et un second élément de résistance s'étendant le long de la longueur L de la sangle de ceinture, le premier élément de résistance et le second élément de résistance étant reliés l'un à l'autre par un support, **caractérisée en ce que** le support est constitué de matière plastique, **en ce que** le premier élément de résistance (3) et le second élément de résistance (3) sont coulés dans le support de la sangle de ceinture (1), **en ce que** les éléments de résistance (3) sont constitués d'un matériau à résistance élevée, tel que de l'acier, du câble d'acier, de l'aramide et/ou du Kevlar et sont résistants aux coupures.

2. Sangle de ceinture (1) selon la revendication 1, **caractérisée en ce que** le support place les éléments de résistance les uns par rapport aux autres.

3. Sangle de ceinture (1) selon la revendication 1 ou 2, **caractérisée en ce que** les éléments de résistance sont constitués de matière plastique.

4. Sangle de ceinture (1) selon l'une des revendications précédentes, **caractérisée en ce que** le support est constitué de PU ou de PUR.

5. Sangle de ceinture (1) selon l'une des revendications précédentes, **caractérisée en ce qu'**au moins deux éléments de résistance (3) sont disposés espacés entre eux latéralement et/ou les uns au-dessus des autres parallèlement à la longueur L.

6. Sangle de ceinture (1) selon l'une des revendications précédentes, **caractérisée en ce que** les éléments de résistance (3) présentent une structure toronnée.

7. Sangle de ceinture (1) selon les revendications précédentes, **caractérisée en ce qu'**au moins un élément de résistance (3) est électriquement conducteur.

8. Sangle de ceinture (1) selon les revendications précédentes, **caractérisée en ce qu'**au moins un élément (2) électriquement conducteur entre au moins deux points est disposé sur ou dans la sangle de ceinture (1).

9. Sangle de ceinture (1) selon les revendications précédentes 7 et 8, d'après laquelle un flux de courant peut être mesuré par suite de la conductivité électrique de l'élément de résistance (2) ou de l'élément conducteur (3).

10. Sangle de ceinture (1) selon les revendications précédentes 7 à 9, **caractérisée en ce qu'**une interruption du flux de courant peut être mesurée par suite de la conductivité électrique de l'élément de résistance (2) ou de l'élément conducteur (3).

11. Système de retenue destiné à être utilisé dans un véhicule, **caractérisé en ce que** le système de retenue comprend au moins une sangle de ceinture (1) selon l'une des revendications précédentes et au moins un élément de verrouillage.

12. Système de retenue selon la revendication 11, **caractérisé en ce que** le système de retenue comporte un dispositif d'enroulement pour l'enroulement de la sangle de ceinture.

13. Système de retenue selon les revendications précédentes 11 ou 12, **caractérisé en ce qu'**il comprend un dispositif de surveillance, le dispositif de surveillance surveillant une liaison électrique établie par l'au moins un élément électriquement conducteur après la fermeture de l'élément de verrouillage.
